# EUROPEAN PATENT APPLICATION

(11) **EP 4 620 618 A1**
(43) Date of publication of application: **24.09.2025**
(21) Application number: 24883546.4
(22) Date of filing: 19.11.2024
(51) Int. Cl.: B24B 35/00

(54) **SUPERFINISHING METHOD, ROLLER BEARING MANUFACTURING METHOD, VEHICLE MANUFACTURING METHOD, MACHINE MANUFACTURING METHOD, AND SUPERFINISHING DEVICE**

(30) Priority: 22.01.2024 JP 2024007501
(71) Applicant: NSK Ltd., Tokyo 141-8560 (JP)
(72) Inventor: HADA, Ryosuke, Fujisawa-shi Kanagawa 2518501 (JP); KOBAYASHI, Takeshi, Fujisawa-shi Kanagawa 2518501 (JP); ONUKI, Ryoga, Fujisawa-shi Kanagawa 2518501 (JP)
(74) Representative: Grünecker Patent- und Rechtsanwälte PartG mbB
(86) International application number: PCT/JP2024/040965
(87) International publication number: WO 2025/158758

(57) **Abstract**

A component (17) of a roller bearing has a middle portion (27) having a circumferential surface with a linear profile extending at least in an axial direction, and an end portion (25) having a circumferential surface with a crown profile. A superfinishing method includes superfinishing the end portion (25) with a first grindstone (31) while rotating the component (17), and superfinishing the middle portion (27) with a second grindstone (33) prepared separately from the first grindstone (31) the while rotating the component (17).

## Description

### TECHNICAL FIELD

The present invention relates to a superfinishing method, a method for manufacturing a roller bearing, a method for manufacturing a vehicle, a method for manufacturing a machine, and a superfinishing apparatus.

Priority is claimed on Japanese Patent Application No. 2024-007501, filed January 22, 2024, the content of which is incorporated herein by reference.

### BACKGROUND ART

Generally, when a roller (rolling body) of a roller bearing is superfinished by an infeed method (stop grinding), the roller is sandwiched between a pair of drive rollers, and the roller is caused to revolve by rotatively driving each of the drive rollers in the same direction in this state. Further, a superfinishing grindstone is pressed against the roller with a predetermined pressure while vibrating in a generatrix direction on a rolling surface of the roller, and the superfinishing grindstone is caused to perform traversing in the generatrix direction on the rolling surface of the roller. In addition, a roller of a roller bearing may be provided with a crown shape in order to prevent excessive contact surface pressure due to stress concentration in contact end portions between the roller and a raceway surface of a raceway ring. The crown shape includes a compound crown shape in which the generatrix shape of a rolling surface of a roller is an arc having a small radius near both ends on the rolling surface, a logarithmic crown shape in which the generatrix shape is a logarithmic shape, and the like.

When rollers having a compound crown shape or a logarithmic crown shape are superfinished by the foregoing method, there are problems of insufficient machining and uneven surface roughness in addition to uneven abrasion of a grindstone and an extremely short service life of the grindstone. Hence, various kinds of superfinishing have been proposed.

For example, Patent Document 1 discloses a method for superfinishing a rolling surface (transfer surface) of a roller having a compound crowning surface with a large diameter arc in a middle portion in an axial direction and small diameter arcs in end portions in the axial direction. In this machining method, after machining the entire rolling surface of the roller in the axial direction, only the large diameter arc in the middle portion on the rolling surface in the axial direction is separately machined. In addition, Patent Document 1 describes that this machining method resolves the problems described above by stopping a traverse operation for a predetermined time in the small diameter arcs in the end portions in the axial direction and that even finishing surface roughness can be obtained for both the large diameter arc and the small diameter arcs even in the case of a compound crown shape or a logarithmic crown shape.

### Citation List

### Patent Document

Patent Document 1: Japanese Patent No. 6517105

### SUMMARY OF INVENTION

### Technical Problem

However, in superfinishing, a grindstone wears during a processing cycle so as to follow the shape of a surface to be machined. For this reason, when a large diameter arc in a middle portion of a roller in an axial direction having a crown shape and small diameter arcs in end portions in the axial direction are machined during the same cycle, the shape followed by the grindstone changes significantly depending on a processing position. In addition, in the small diameter arcs in the end portions in the axial direction where the generatrix shape is curved significantly, since it takes time for the shape of the grindstone to follow the shape of the surface to be machined, there is a problem that a desired crown shape is not achieved and machining is likely to be insufficient. In addition, the foregoing problems are not limited to a rolling surface of a roller, and similar problems will occur in machining a raceway surface of a raceway ring.

An object of aspects according to the present invention is to provide a superfinishing method, a method for manufacturing a roller bearing, a method for manufacturing a vehicle, a method for manufacturing a machine, and a superfinishing apparatus capable of efficiently superfinishing a machined surface to have favorable surface roughness in a short period of time while decrease in service life of a grindstone due to uneven wear is curbed even when a shape of the machined surface changes depending on a place. In addition, another object of the aspects according to the present invention is to provide a technology which is advantageous for improving product quality and reducing costs.

### Solution to Problem

An aspect of the present invention is a method for superfinishing a component of a roller bearing. The component has a middle portion having a circumferential surface with a linear profile extending at least in an axial direction, and an end portion having a circumferential surface with a crown profile transitioning from the linear profile. The method includes superfinishing the end portion with a first grindstone while rotating the component, and superfinishing the middle portion with a second grindstone prepared separately from the first grindstone while rotating the component.

Another aspect of the present invention is a method for manufacturing a roller bearing including manufacturing a roller bearing using the foregoing superfinishing method.

Another aspect of the present invention is a method for manufacturing a vehicle including manufacturing a roller bearing using the foregoing manufacturing method, and assembling a vehicle using the roller bearing.

Another aspect of the present invention is a method for manufacturing a machine including manufacturing a roller bearing using the foregoing manufacturing method, and assembling a machine using the roller bearing.

Another aspect of the present invention is an apparatus for superfinishing a component of a roller bearing. The component has a middle portion having a circumferential surface with a linear profile extending at least in an axial direction, and an end portion having a circumferential surface with a crown profile transitioning from the linear profile. The apparatus includes a drive portion rotating the component, a first grindstone, a second grindstone prepared separately from the first grindstone, and a mechanism for pressing the first grindstone and the second grindstone against the component. The mechanism includes a first mode for superfinishing the end portion with the first grindstone, and a second mode for superfinishing the middle portion with the second grindstone.

### Advantageous Effects of Invention

According to the aspects of the present invention, it is possible to efficiently superfinish a machined surface to have favorable surface roughness in a short period of time while decrease in service life of a grindstone due to uneven wear is curbed even when a shape of the machined surface changes depending on a place. In addition, according to the aspects of the present invention, it is advantageous for improving product quality and reducing costs.

### BRIEF DESCRIPTION OF DRAWINGS

[FIG. 1] FIG. 1 is a cross-sectional view of a main part of a cylindrical roller bearing.
[FIG. 2] FIG. 2 is a partial side view of a cylindrical roller.
[FIG. 3] FIG. 3 is a process explanatory diagram schematically showing a procedure of superfinishing crown portions and a middle portion on a rolling surface of the cylindrical roller.
[FIG. 4] FIG. 4 is a schematic constitution diagram schematically showing a main part of a superfinishing apparatus.
[FIG. 5] FIG. 5 is a schematic constitution diagram schematically showing a constitution of crowning finishing portions.
[FIG. 6] FIG. 6 is a schematic constitution diagram schematically showing a constitution of a middle portion finishing portion.
[FIG. 7] FIG. 7 is a process explanatory diagram schematically showing a situation of superfinishing the crown portions (part 1).
[FIG. 8] FIG. 8 is an explanatory view showing a situation in which a grindstone shape of a first grindstone follows the crown portion in the case of the superfinishing shown in FIG. 7.
[FIG. 9] FIG. 9 is another process explanatory diagram schematically showing a situation of superfinishing the crown portions (part 2).
[FIG. 10] FIG. 10 is a schematic constitution diagram of a grindstone holder including an oscillation mechanism.
[FIG. 11] FIG. 11 is a process explanatory diagram schematically showing a situation of superfinishing the middle portion (part 1).
[FIG. 12] FIG. 12 is another process explanatory diagram schematically showing a situation of superfinishing the middle portion (part 2).
[FIG. 13] FIG. 13 is a schematic constitution diagram of a grindstone holder including the oscillation mechanism.
[FIG. 14] FIG. 14 is a process explanatory diagram schematically showing a situation of superfinishing an inner ring or an outer ring serving as a raceway ring of the cylindrical roller.
[FIG. 15] FIG. 15 is another process explanatory diagram schematically showing a situation of superfinishing the inner ring or the outer ring serving as the raceway ring of the cylindrical roller.
[FIG. 16] FIG. 16 is a process explanatory diagram schematically showing a situation of superfinishing an inner ring raceway surface of the inner ring.
[FIG. 17] FIG. 17 is a schematic cross-sectional view of a motor.

### DESCRIPTION OF EMBODIMENT

Hereinafter, an embodiment of the present invention will be described in detail with reference to the drawings. In the embodiment, a roller bearing is a cylindrical roller bearing having a cylindrical roller. The kind of roller bearing is not limited to this. In other embodiments, the roller bearing may be of other forms, such as a needle-shaped roller bearing, a tapered roller bearing, or an automatic aligning roller bearing and may be either a radial type or a thrust type.

### <Roller bearing>

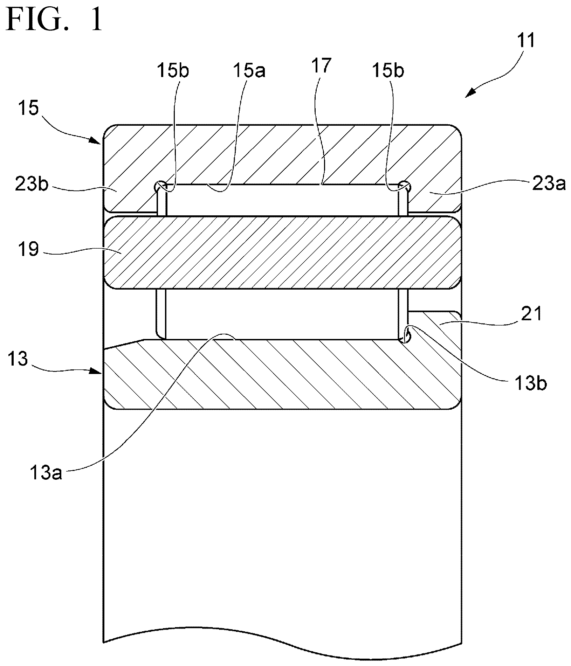

FIG. 1 is a cross-sectional view of a main part of a cylindrical roller bearing 11. In the embodiment, the cylindrical roller bearing 11 includes an inner ring 13 having an inner ring raceway surface 13a on an outer circumferential surface, an outer ring 15 having an outer ring raceway surface 15a on an inner circumferential surface, a plurality of cylindrical rollers (rolling bodies) 17 arranged in a rollable manner between the inner ring raceway surface 13a and the outer ring raceway surface 15a, and a holder 19 for holding the plurality of cylindrical rollers 17 at substantially equal intervals in a circumferential direction. An inner ring flange portion 21 is provided on one end side of the inner ring 13 in an inner ring axial direction. A pair of outer ring flange portions 23a and 23b are provided on both end sides of the outer ring 15 in an outer ring axial direction. A clearance groove 13b is formed in the circumferential direction between the inner ring raceway surface 13a and the inner ring flange portion 21. The clearance grooves 15b are formed in the circumferential direction between the outer ring raceway surface 15a and an outer ring flange portion 21a and between the outer ring raceway surface 15a and an outer ring flange portion 21b, respectively.

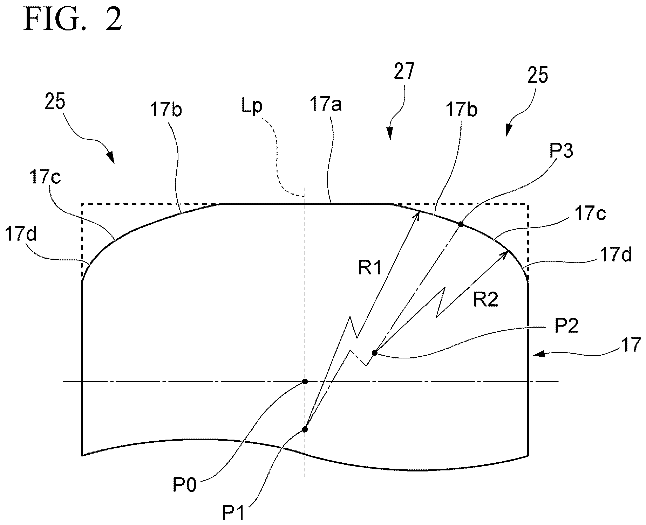

FIG. 2 is a partial side view of the cylindrical roller 17. In the embodiment, the cylindrical roller 17 has a middle portion 27 positioned near the center in the axial direction, and end portions (crowning portions, partial crown portions, or crown portions) 25 positioned near ends in the axial direction. The middle portion 27 has a circumferential surface with a linear profile extending at least in the axial direction. The end portions 25 each have a circumferential surface with a crown profile (partial crown profile) transitioning from the linear profile of the middle portion 27. The circumferential surface of the middle portion 27 has a primary linear profile extending at least in the axial direction, and the circumferential surfaces of the end portions 25 each have a sloped profile inclined with respect to the primary linear profile. The sloped profile includes a curved profile and/or a linear profile. In the cylindrical roller 17, a circumferential surface 17a of the middle portion 27 is formed in the axial direction at a middle portion of a roller axis (rotation axis of the cylindrical roller 17) in the axial direction. In an example, the circumferential surfaces of the end portions 25 include a pair of first crowning surfaces (first crown surfaces or first partial crown surfaces) 17b and a pair of second crowning surfaces (second crown surfaces or second partial crown surfaces) 17c. The first crowning surfaces 17b are formed respectively from outer end portions of the circumferential surface 17a in the axial direction toward both outward sides in the axial direction. The second crowning surfaces 17c are formed respectively from outer end portions on the first crowning surfaces 17b in the axial direction further toward the outward sides in the roller axis direction. In this example, the cylindrical roller 17 has a compound crown profile (compound crown shape) in which a plurality of crown profiles with curvatures and/or profiles different from each other are arranged and/or combined in the axial direction. For example, the circumferential surfaces of the end portions 25 each have a compound crown shape in which the crowning surfaces 17b and 17c with a plurality of kinds of radii of curvature are formed on each of both sides on the circumferential surface 17a of the middle portion 27. As necessary, chamfered portions 17d can be formed respectively in both edge portions of the cylindrical roller 17 in the roller axis direction. Each of boundary parts (transitioning regions) between the circumferential surface 17a and the first crowning surfaces 17b of the cylindrical roller 17 can be machined into a smooth and continuous curved surface (transitioning surface).

The crown shape shown in FIG. 2 is expressed with a curvature more exaggerated than the actual curvature, and similarly in the drawings used in the following description as well, the crown shape is expressed with a more exaggerated curvature. In the following description, the axial direction of the roller (a direction along the center axis, a roller axis direction, or a rotation axis direction) is also referred to as "an axial direction".

In an example, the crown shape (crown profile) can have a logarithmic crown shape (a shape in which the crown profile follows a logarithmic curvature or profile). For example, in the foregoing compound crown shape, a radius R1 of curvature on the first crowning surface 17b in the axial direction is set to be larger than a radius R2 of curvature on the second crowning surface 17c in the axial direction so as to approximate to a logarithmic crown shape. In addition, a center position P1 of the radius R1 of curvature on the first crowning surface 17b and a center position P2 of the radius R2 of curvature on the second crowning surface 17c may be individually set such that tangents in the axial direction coincide with each other in the boundary between the first crowning surface 17b and the second crowning surface 17c. For example, as shown in FIG. 2, the center position P1 of the radius R1 of curvature on the first crowning surface 17b is provided on an axially orthogonal line Lp passing through a center P0 of the cylindrical roller 17 in the axial direction and the radial direction. The center position P2 of the radius R2 of curvature on the second crowning surface 17c may be provided on a line connecting the center position P1 of the radius R1 of curvature on the first crowning surface 17b and a boundary point (intersection) P3 between the first crowning surface 17b and the second crowning surface 17c.

In an example, the cylindrical roller 17 has the circumferential surface 17a, the first crowning surfaces 17b, and the second crowning surfaces 17c, and the radii of curvature of these crowning surfaces change in two stages. In this case, the surface shape thereof can be made closer to a logarithmic crown shape. As a result, a rolling contact function (high load resistance) of the rolling body is enhanced. The radii of curvature change in two stages in the foregoing example. However, in addition to this, a constitution in which they change in three or more stages, or a constitution in which they change continuously may be adopted. In addition, the first crowning surface 17b and the second crowning surface 17c may have a logarithmic crown shape in which a rolling surface of a cross-sectional shape of the cylindrical roller 17 in the axial direction is expressed by a continuous logarithmic function. The logarithmic crown shape and the compound crown shape which have been referred to herein are not particularly limited. For example, the ratio D/L of a drop amount D in a roller effective length end portion of the cylindrical roller 17 to an axial length L of the crown shaped part (crown portion) is classified as 0.001 to 0.002 when the drop amount D is relatively small, as 0.005 or larger when the drop amount D is relatively large, and as 0.002 to 0.005 when the drop amount D is the foregoing intermediate amount. The foregoing numerical values are merely examples, and it is not limited to these.

In the cylindrical roller bearing 11, the inner ring raceway surface 13a and/or the outer ring raceway surface 15a may have a full crown shape (full crown profile) or a partial crown shape (partial crown profile). In an example, a full crown shape has a shape in which a cross section in the axial direction has an entirely gentle arc (crown profile), a cross-sectional shape having a shape in which a plurality of different arcs are combined, a cross-sectional shape not substantially including a straight shape, or the like. In an example, a partial crown shape has a shape in which a linear shape (linear profile), an arc shape (crown profile), and the like are combined. In the following description, the first crowning surfaces 17b and the second crowning surfaces 17c are collectively referred to as crown portions.

### <Overview of procedure of superfinishing>

Next, a procedure of superfinishing a circumferential surface (rolling surface) of a roller of the cylindrical roller bearing 11, and a procedure of superfinishing a circumferential surface (raceway surface) of a raceway ring included in the cylindrical roller bearing 11 will be described. First, a procedure of superfinishing a rolling surface of the cylindrical roller 17 will be described.

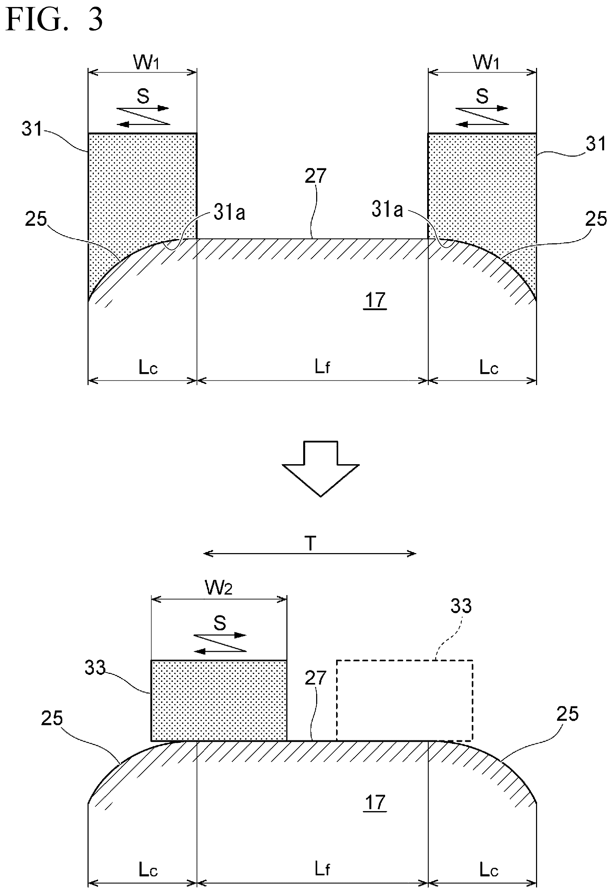

FIG. 3 is a process explanatory diagram schematically showing a procedure of superfinishing the rolling surface of the cylindrical roller 17. FIG. 3 shows a state after crown shapes are formed in the cylindrical roller 17. The cylindrical roller 17 has a middle portion (flat portion) 27 positioned near the center in the axial direction, and the end portions (crown portions or partial crown portions) 25 positioned near the respective ends in the axial direction. The middle portion 27 has a circumferential surface with a linear profile extending at least in the axial direction. The end portions 25 each have a circumferential surface with a crown profile (partial crown profile) of the middle portion 27 transitioning from the linear profile. The end portions 25 are formed respectively at both ends of the cylindrical roller 17 (rolling surface (outer circumferential surface)) in the axial direction. The middle portion 27 is disposed at the center on the rolling surface in the axial direction, and both end portions thereof are respectively connected to the pair of end portions 25. The cross section of the middle portion 27 in the axial direction has a linear profile extending at least in the axial direction.

The end portions 25 and the middle portion 27 described above are superfinished using first grindstones 31 and a second grindstone 33 each of which is prepared separately. A superfinishing process includes superfinishing the end portions 25 using the first grindstones 31 while rotating the cylindrical roller 17, and superfinishing the middle portion 27 using the second grindstone 33 that is separate from the first grindstones 31 while rotating the cylindrical roller 17. Schematically, while the cylindrical roller 17 is rotatively driven around the axis of the rolling surface, the end portions 25 are superfinished by the first grindstones 31, and then the middle portion 27 is superfinished by the second grindstone 33 different from the first grindstones 31.

The first grindstones 31 are pressed against the surfaces at both ends of the cylindrical roller 17 in the axial direction. Superfinishing includes pressing the first grindstones 31 against the end portions (crown portions) 25 in a direction perpendicular to the axial direction of the cylindrical roller 17 (pressing direction). A contact portion (contact surface) 31a of the first grindstone 31 comes into contact with the end portion 25 of the cylindrical roller 17. The contact portion 31a can have a sloped profile inclined with respect to the pressing direction. At least a part of the sloped profile (concave profile) of the first grindstone 31 can include that formed by abrasion. The first grindstone 31 is disposed such that at least a part of the contact portion (contact surface) 31a having a sloped profile intersects the axial direction. The sloped profile is a profile exhibited in a cross section along a surface including the axial direction and the pressing direction of the cylindrical roller 17 and has an inclination with respect to the axial direction of the cylindrical roller 17. The sloped profile has an inclination extending forward in the pressing direction gradually outward from the inside in the axial direction of the cylindrical roller 17. In an example, the sloped profile of the contact portion 31a has a concave profile. For example, the concave profile of the contact portion 31a at least partially corresponds to the crown profile of the end portion 25. In an example, the end portions 25 of the cylindrical roller 17 include one end portion (first end portion) 25 and the other end portion (second end portion) 25 arranged away from each other. Superfinishing includes processing the first end portion 25 and the second end portion 25 at different timings. Alternatively, superfinishing includes processing the first end portion 25 and the second end portion 25 substantially at the same time. For example, the first grindstones 31 can include two grindstones 31 and 31 disposed away from each other. The direction of the sloped profile (concave profile) of the contact portion 31a pressed against the first end portion 25 differs from the direction of the sloped profile (concave profile) of the contact portion 31a pressed against the second end portion 25. The two first grindstones 31 and 31 can be disposed such that at least parts of the contact portions 31a (sloped profiles of the contact portions 31a) face each other. At least a part of the contact portion (contact surface) 31a is disposed so as to face the inside of the cylindrical roller 17 in the axial direction. In superfinishing of the end portions 25, micro-vibration (arrow S) is applied to the first grindstones 31 in the axial direction. In an example, when grindstone widths W1 of the first grindstones 31 are shorter than widths Lc of the crown portions 25 in the axial direction, the entire widths of the end portions 25 are machined by causing the first grindstones 31 to perform traversing in the axial direction. The first grindstones 31 have an axial width smaller than the axial widths (lengths in the axial direction) of the end portions 25, and superfinishing includes causing the first grindstones 31 to micro-vibrate in the axial direction and causing the first grindstones 31 to perform traversing in the axial direction. When the first grindstones 31 have an axial width larger than the axial widths (lengths in the axial direction) of the end portions 25, superfinishing includes causing the first grindstones 31 to micro-vibrate in the axial direction.

The middle portion 27 is superfinished by pressing the second grindstone 33 against the surface of the cylindrical roller 17 at the center in the axial direction and applying micro-vibration (arrow S) in the axial direction. Superfinishing includes pressing the second grindstone 33 against the middle portion 27 in a direction perpendicular to the axial direction of the cylindrical roller 17. In an example, when a grindstone width W2 of the second grindstone 33 is shorter than a width Lf of the middle portion 27 in the axial direction, the middle portion 27 is machined over the entire width by causing the second grindstone 33 to perform traverse (arrow T) in the axial direction. The grindstone widths W1 and W2 which have been referred to herein mean widths in a workpiece axis direction in which the first grindstones 31 and the second grindstone 33 grind the cylindrical roller 17 which is a workpiece.

In a superfinishing method, the crown portions 25 and the middle portion 27 are superfinished using separate grindstones. According to this, particularly in the crown portions 25, it took time for grindstone shapes to follow the shapes of the crown portions 25, but the processing time can be drastically shortened by performing superfinishing with grindstones dedicated for the crown portions 25. Namely, when the crown portions 25 and the middle portion 27 are superfinished with common grindstones, there is a need to successively adjust the grindstone shape to a shape suitable for each of the crown portions 25 and the middle portion 27, but there is a significant difference in shape between the two portions so that it takes a long time for the grindstone shape to follow each shape. In this case, wear of the grindstones becomes uneven, and decrease in service life of the grindstones cannot be avoided. In addition, since the processing time is lengthened, clogging is likely to occur in the grindstones due to shavings or the like.

Meanwhile, by processing the crown portions 25 and the middle portion 27 separately, the first grindstones 31 processing the crown portions 25 can start processing the next workpiece (cylindrical roller) while maintaining the grindstone shapes following the shapes of the crown portions 25 through superfinishing. In this case, the grindstone shapes of the first grindstones 31 are already shapes matching the shapes of the crown portions 25 which are target shapes of the next workpiece. For this reason, processing of the next workpiece into the shapes of the crown portions 25 can be performed smoothly. In this case, uneven wear of the grindstones is curbed. In addition, the time required for one grindstone to traverse between the crown portions 25 and the middle portion 27 can be reduced, and the time required for superfinishing the crown portions 25 can be shortened.

### <Superfinishing apparatus>

Next, an example of a constitution of a superfinishing apparatus for performing the procedure of the foregoing superfinishing method will be described. Regarding the superfinishing apparatus, various forms can be employed in accordance with the shape, the material, the size, and the like of a workpiece. The constitution of the apparatus described herein is merely an example and can be suitably changed in accordance with a workpiece, its processing conditions, and the like.

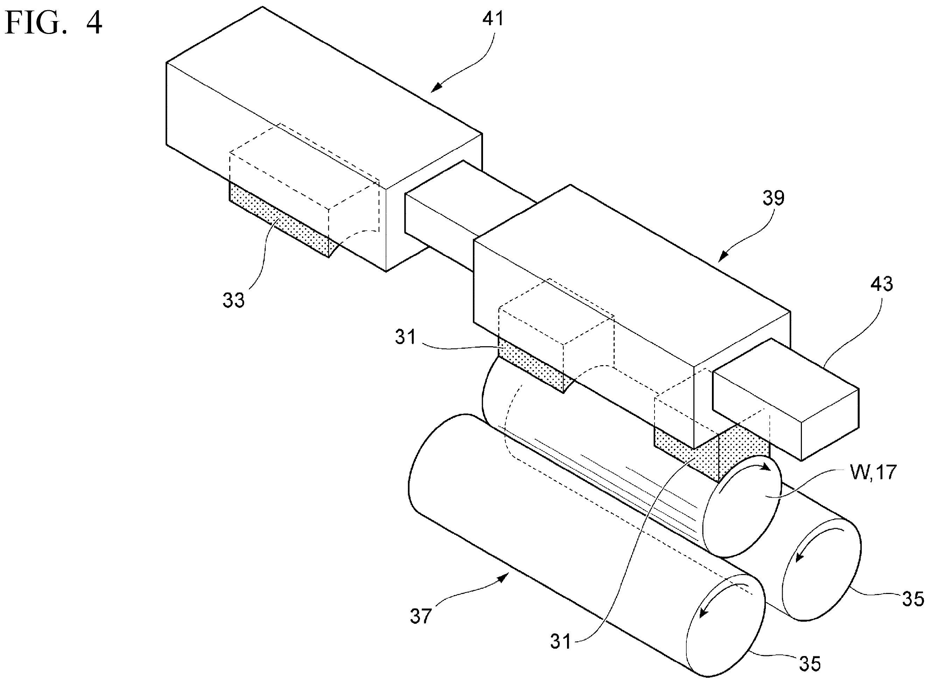

FIG. 4 is a schematic constitution diagram schematically showing a main part of a superfinishing apparatus 100. The superfinishing apparatus 100 includes a rotational drive portion (drive portion) 37 having a pair of rollers 35 and 35 for rotating a workpiece (cylindrical roller) W around the axis of the rolling surface, the pair of first grindstones 31 and 31, the second grindstone 33 prepared separately from the first grindstones 31 and 31, and mechanisms 39 and 41 for pressing the first grindstones 31 and the second grindstone 33 against the workpiece W. The mechanisms 39 and 41 have a first mode in which the end portions of the workpiece W are superfinished by the first grindstones 31 and 31, and a second mode in which the middle portion of the workpiece W is superfinished by the second grindstone 33. The mechanisms 39 and 41 include a first mechanism (crowning finishing portion) 39 and a second mechanism (middle portion finishing portion) 41. The crowning finishing portion 39 performs superfinishing of the crown portions at both ends of the workpiece W in the axial direction with the pair of first grindstones 31 and 31. The middle portion finishing portion 41 performs superfinishing of the middle portion at the center of the workpiece W in the rotation axis with the second grindstone 33. Regarding grain sizes of the first grindstones 31 and 31 and the second grindstone 33, the smaller the roughness, the longer the service life of a bearing will be, and the greater the roughness, the higher the productivity will be. Therefore, a target roughness may be set in accordance with various conditions. For example, the crowning finishing portion 39 and the middle portion finishing portion 41 are supported so as to be able to move along a rail 43 disposed parallel to the rollers 35 and 35. Accordingly, one of them moves to the position of the workpiece W and the other moves to a retreat position so that processing by the crowning finishing portion 39 and processing by the middle portion finishing portion 41 can be performed successively. In addition, a constitution in which the crowning finishing portion 39 and the middle portion finishing portion 41 are fixed and the workpiece W moves may be adopted. In FIG. 4, the contact surfaces of the grindstones 31 and 33 each have a curved surface along the circumferential surface of the workpiece W, but they are not necessarily limited to this.

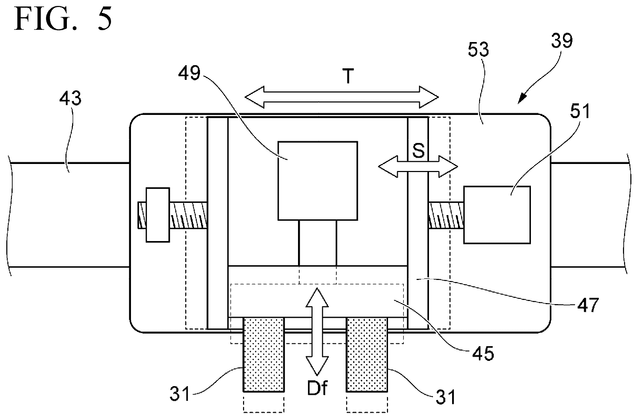

FIG. 5 is a schematic constitution diagram schematically showing a constitution of the crowning finishing portion 39. The pair of first grindstones 31 and 31 are fixed to a grindstone holder 45. The grindstone holder 45 is supported by a slide block 47 and can be moved in a feeding direction Df toward the workpiece W by a feeding drive portion 49 fixed to the slide block 47. The slide block 47 is supported by a base 53 so as to be able to move in the axial direction of the workpiece W. When vibration is applied to the slide block 47 in the axial direction by a vibration applying portion 51 fixed to the base 53, the pair of first grindstones 31 and 31 micro-vibrate (arrow S) in the axial direction. The base 53 can perform a traverse operation (arrow T) along the rail 43 by a drive source (not shown).

Namely, the grindstone holder 45 and the feeding drive portion 49 function as a first pressurization mechanism for pressurizing the first grindstones 31 and 31 toward a workpiece, and the slide block 47 and the vibration applying portion 51 function as a first grindstone micro-vibration mechanism for causing the first grindstones 31 and 31 to micro-vibrate in the axial direction.

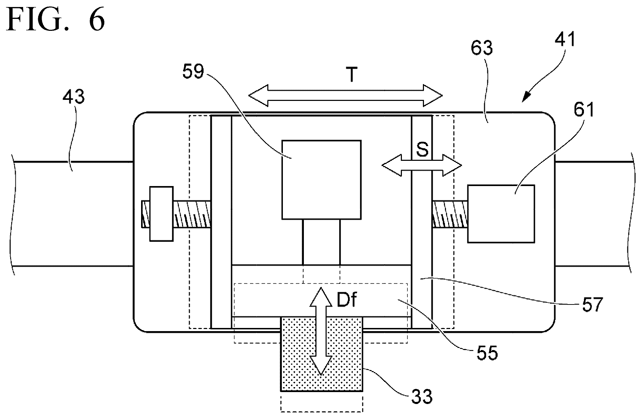

FIG. 6 is a schematic constitution diagram schematically showing a constitution of the middle portion finishing portion 41. Similar to the crowning finishing portion 39, the middle portion finishing portion 41 includes a grindstone holder 55 for fixing the second grindstone 33, a slide block 57, a feeding drive portion 59, a vibration applying portion 61, and a base 63. This constitution enables the second grindstone 33 to be fed in the feeding direction Df, to micro-vibrate as indicated by the arrow S, and to perform a traverse operation as indicated by the arrow T.

In addition, similarly, the grindstone holder 55 and the feeding drive portion 59 function as a second pressurization mechanism for pressurizing the second grindstone 33 toward a workpiece, and the slide block 57 and the vibration applying portion 61 function as a second grindstone micro-vibration mechanism for causing the second grindstone 33 to micro-vibrate in the axial direction.

A mechanism for causing the base 53 to perform traversing along the rail 43 by the drive source (not shown) functions as a first grindstone movement mechanism. A mechanism for causing the base 63 to perform traversing along the rail 43 functions as a second grindstone movement mechanism. The crowning finishing portion 39 and the middle portion finishing portion 41 are fixed. In a case of moving a workpiece, a mechanism for moving a workpiece functions as the first grindstone movement mechanism and the second grindstone movement mechanism.

Known mechanisms, such as ball screw mechanism, electromagnetic/hydraulic actuators, or air cylinders, can be utilized as drive mechanisms (drive sources) for the feeding drive portions 49 and 59 and the vibration applying portions 51 and 61, but an operation mechanism (drive source) for each portion is not particularly limited.

### <Superfinishing of crown portion>

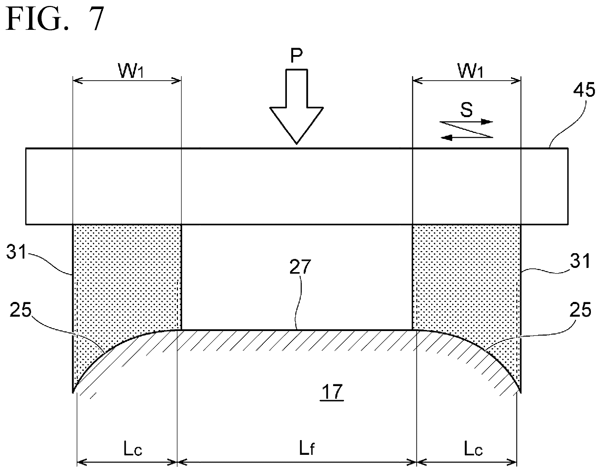

FIG. 7 is a process explanatory diagram schematically showing a situation of superfinishing the crown portions 25 (part 1). In the example shown in FIG. 7, both the first grindstones 31 and 31 have the grindstone width W1 equal to or larger than the widths Lc of the crown portions 25 in the axial direction (Lc≤W1). The grindstone positions are set such that the first grindstones 31 and 31 each protrude to the inward side which is the middle portion 27 side and to the outward side which is a side opposite to the middle portion 27 side due to the difference between the grindstone width W1 and the widths Lc of the crown portions 25 in the axial direction. In this case, while the cylindrical roller 17 is rotated around the axis, the first grindstones 31 and 31 are pressurized against the crown portions 25 of the cylindrical roller 17 with a predetermined load P. At the same time, the position of the grindstone holder 45 (crowning finishing portion 39) is at a stop, and the first grindstones 31 and 31 are caused to micro-vibrate in the axial direction (arrow S) by the first grindstone micro-vibration mechanism.

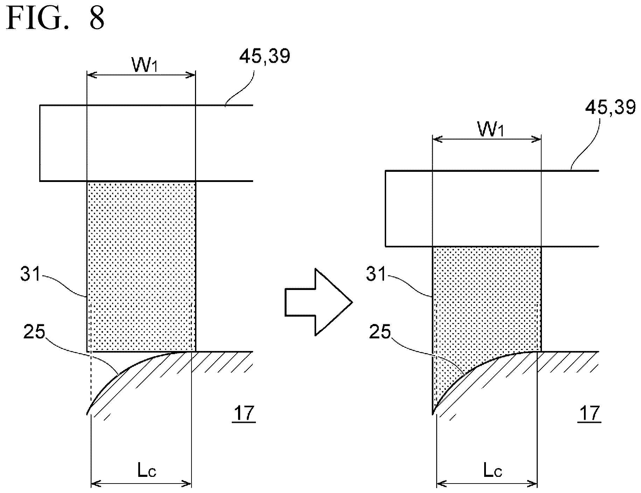

FIG. 8 is an explanatory view showing a situation in which the grindstone shape of the first grindstone 31 follows the crown portion 25 in the case of the superfinishing shown in FIG. 7. In this case, since the grindstone width W1 of the first grindstone 31 is wider than the width Lc of the crown portion 23 in the axial direction, the crown portion 25 is within the grindstone width W1 so that a traverse operation in the axial direction can be made unnecessary or shortened. In this manner, the crown portions 25 are superfinished due to rotation of the cylindrical roller 17, pressurization from the first grindstones 31, and micro-vibration of the first grindstones 31.

According to this superfinishing, the grindstone holder 45 for holding the pair of first grindstones 31 and the vibration applying portion 51 are integrated, and the first grindstones 31 micro-vibrate without being inclined in the axial direction. For this reason, postures of the first grindstones 31 (grindstone postures) during processing are maintained constant so that one-sided wear of the grindstones is curbed.

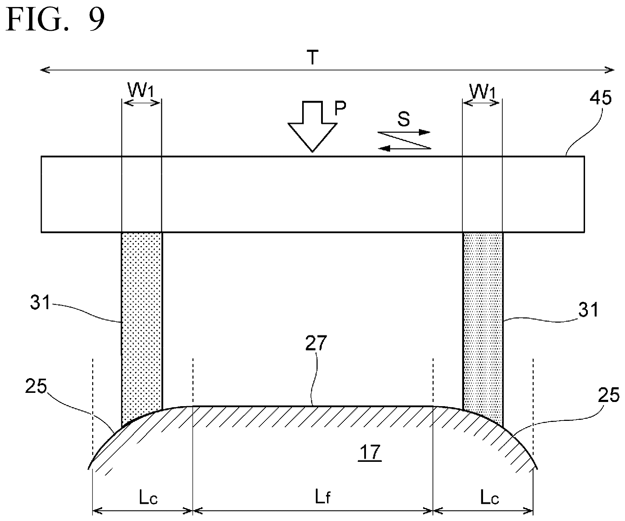

FIG. 9 is another process explanatory diagram schematically showing a situation of superfinishing the crown portions 25 (part 2). In the example shown in FIG. 9, both the first grindstones 31 and 31 have the grindstone width W1 narrower than the widths Lc of the crown portions 25 in the axial direction (Lc>W1). In this case, while the cylindrical roller 17 is rotated around the axis, the first grindstones 31 and 31 are pressurized against the crown portions 25 of the cylindrical roller 17 with the predetermined load P. At the same time, the first grindstones 31 and 31 are caused to perform traversing in the axial direction by the first grindstone movement mechanism described above and are caused to micro-vibrate in the axial direction (arrow S) by the first grindstone micro-vibration mechanism.

In this superfinishing, the grindstone holder 45 for holding the pair of first grindstones 31 is integrated with the vibration applying portion 51, and the first grindstones 31 micro-vibrate without being inclined in the axial direction. For this reason, the postures of the first grindstones 31 (grindstone postures) during processing are maintained constant so that extreme one-sided wear of the grindstones is curbed. In addition, due to processing accompanied by a traverse operation, since the places of the grindstones acting on a certain point on the surfaces of the crown portions 25 are not constant and areas changing in the axial direction increase, smoother and continuous machined surfaces can be obtained. In this case, grindstone surfaces are abraded in a manner of following the surface shapes of the crown portions 25, and therefore a desired crown shape can be obtained.

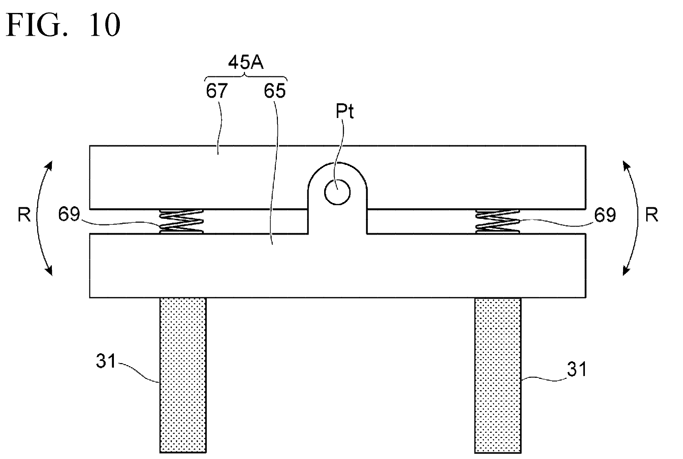

FIG. 10 is a schematic constitution diagram of a grindstone holder 45A including an oscillation mechanism. The grindstone holder 45A includes an oscillation mechanism for causing a pressurization direction toward the cylindrical roller 17 by the first grindstones 31 and 31 to oscillate (arrow R) in the axial direction of the cylindrical roller 17. This oscillation mechanism changes the postures of the first grindstones 31 and 31 such that the roller outer circumferential surface is pressurized in a direction in which it is inclined by a predetermined angle in the normal direction of the roller outer circumferential surface in an axial cross section passing through the rotation axis of the cylindrical roller 17.

For example, the oscillation mechanism can have a constitution including a grindstone holding portion 65 for holding the first grindstones 31 and 31, a support portion 67, and a pair of compression springs 69 and 69. The support portion 67 is provided with a pivot Pt at an intermediate point between the position where one first grindstone 31 is disposed and the position where the other first grindstone 31 is disposed in the grindstone holding portion 65 and supports the grindstone holding portion 65 centered on the pivot Pt. The pair of compression springs 69 and 69 are provided between the grindstone holding portion 65 and the support portion 67 and bias the grindstone holding portion 65 to a neutral position of oscillation strokes.

When the grindstone holder 45A including the foregoing oscillation mechanism is provided in place of the grindstone holder 45 shown in FIG. 7, the grindstone holder 45 oscillates even if the positions of processing by the first grindstones 31 change. The direction in which the grindstones 31 and 31 are pressed against the roller outer circumferential surface approaches the normal direction of the roller outer circumferential surface, thereby making it possible to reduce change in shape required of the grindstones. As a result, when the crown portions 25 are superfinished, occurrence of an insufficiently machined part due to insufficient local contact with the grindstones is prevented. Namely, since the grindstone posture freely changes depending on the processing conditions, the grindstones hit the crown portions 25 in their entirety more reliably and evenly, and therefore a better continuous machined surface can be obtained.

Moreover, when the grindstone holder 45A including the foregoing oscillation mechanism is provided in place of the grindstone holder 45 shown in FIG. 9, the grindstone posture can be optimized in accordance with a traverse operation of the first grindstones 31 and 31.

### <Superfinishing of middle portion>

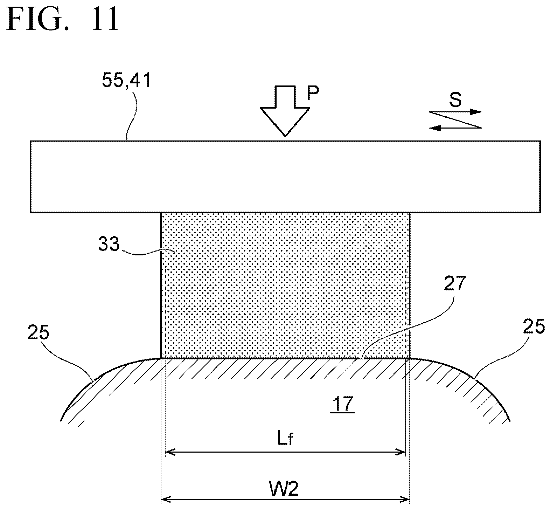

FIG. 11 is a process explanatory diagram schematically showing a situation of superfinishing the middle portion 27 (part 1). In the example shown in FIG. 11, the second grindstone 33 has the grindstone width W2 equal to or larger than the width Lf of the middle portion 27 in the axial direction (Lf≤W2). The grindstone position is set such that the second grindstone 33 protrudes to the crown portion 25 sides at both ends due to the difference between the grindstone width W2 and the width Lf of the middle portion 27 in the axial direction. In this case, while the cylindrical roller 17 is rotated around the axis, the second grindstone 33 is pressurized against the middle portion 27 of the cylindrical roller 17 with the predetermined load P. At the same time, the position of the grindstone holder 55 (middle portion finishing portion 41) is at a stop, and the second grindstone 33 is caused to micro-vibrate in the axial direction (arrow S) by the second grindstone micro-vibration mechanism.

In this case, since the grindstone width W2 of the second grindstone 33 is wider than the width Lf of the middle portion 27 in the axial direction, the middle portion 27 is within the grindstone width W2 so that a traverse operation in the axial direction can be made unnecessary or shortened. In this manner, the middle portion 27 is superfinished due to rotation of the cylindrical roller 17, pressurization from the second grindstone 33, and micro-vibration of the second grindstone 33.

According to this superfinishing, the grindstone holder 55 for holding the second grindstone 33 and the vibration applying portion 61 are integrated, and the second grindstone 33 micro-vibrate without being inclined in the axial direction. For this reason, the posture of the second grindstone 33 (grindstone posture) during processing is maintained constant so that one-sided wear of the grindstone is curbed.

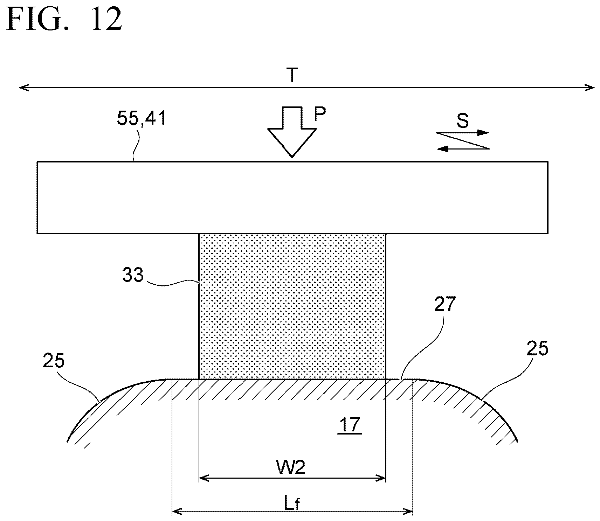

FIG. 12 is another process explanatory diagram schematically showing a situation of superfinishing the middle portion 27 (part 2). In the example shown in FIG. 12, the second grindstone 33 has the grindstone width W2 narrower than the width Lf of the middle portion 27 in the axial direction (Lf>W2). In this case, while the cylindrical roller 17 is rotated around the axis, the second grindstone 33 is pressurized against the middle portion 27 of the cylindrical roller 17 with the predetermined load P. At the same time, the second grindstone 33 is to perform traversing in the axial direction by the second grindstone movement mechanism described above and is caused to micro-vibrate in the axial direction (arrow S) by the second grindstone micro-vibration mechanism.

In this superfinishing, the grindstone holder 55 for holding the second grindstone 33 and the vibration applying portion 61 are integrated, and the second grindstone 33 micro-vibrates without being inclined in the axial direction. For this reason, the posture of the second grindstone 33 (grindstone posture) during processing is maintained constant so that one-sided wear of the grindstone is curbed. In addition, due to processing accompanied by a traverse operation, since the place of the grindstone acting on a certain point on the surface of the middle portion 27 is not constant and the area changing in the axial direction increases, a smoother and continuous machined surface can be obtained.

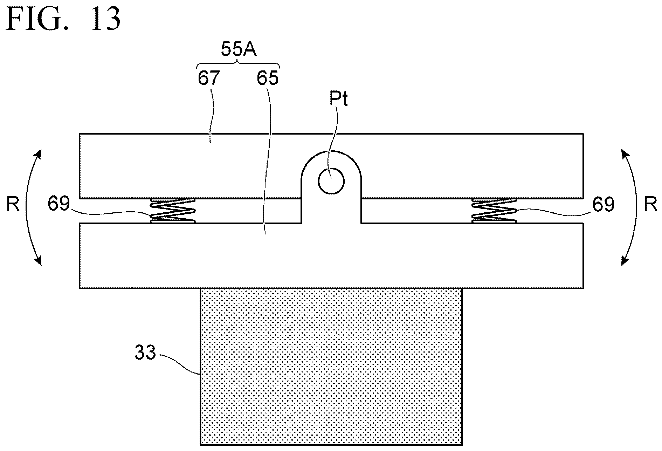

FIG. 13 is a schematic constitution diagram of a grindstone holder 55A including an oscillation mechanism. The grindstone holder 55A includes an oscillation mechanism for causing a pressurization direction toward the cylindrical roller 17 by the second grindstone 33 to oscillate (arrow R) in the axial direction of the cylindrical roller 17. This oscillation mechanism changes the posture of the second grindstone 33 such that the roller outer circumferential surface is pressurized in a direction in which it is inclined by a predetermined angle in the normal direction of the roller outer circumferential surface in an axial cross section passing through the rotation axis of the cylindrical roller 17.

For example, the oscillation mechanism can be similarly constituted except that the second grindstone 33 is provided in place of the pair of first grindstones 31 and 31 in the oscillation mechanism shown FIG. 10 described above.

When the grindstone holder 55A including the foregoing oscillation mechanism is provided in place of the grindstone holder 55 shown in FIG. 12, change in shape required of the grindstone can be reduced even if the point of processing by the second grindstone 33 changes. Accordingly, when the middle portion 27 is superfinished, since the grindstone posture freely changes depending on the processing conditions, the grindstone hits the middle portion 27 in its entirety more evenly, and therefore a better continuous machined surface can be obtained.

Moreover, when the grindstone holder 55A including the foregoing oscillation mechanism is provided in place of the grindstoneholder 45 shown in FIG. 13, the grindstone posture can be optimized in accordance with a traverse operation of the second grindstone 33.

### <Superfinishing of raceway surface>

In the foregoing superfinishing, the rolling surface of the cylindrical roller 17 was a processing object, but the inner ring raceway surface 13a and the outer ring raceway surface 15a of the cylindrical roller bearing 11 shown in FIG. 1 can also be superfinished in a similar manner.

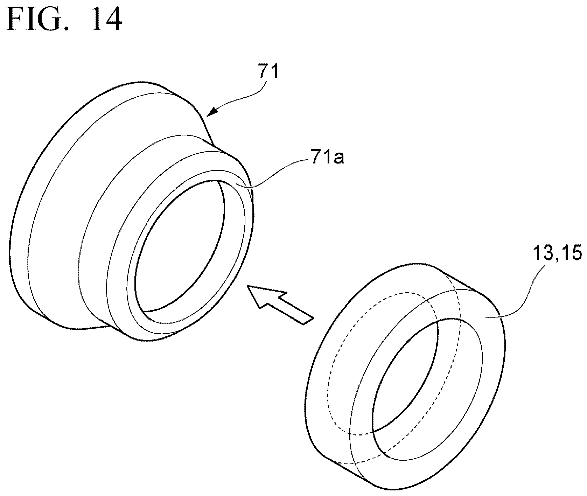

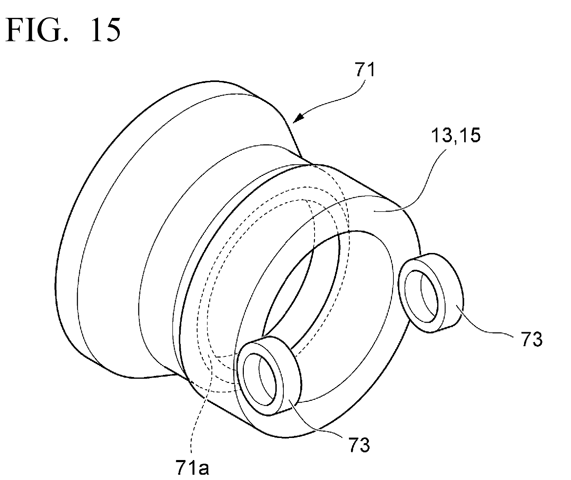

FIGS. 14 and 15 are process explanatory diagrams schematically showing a situation of superfinishing the inner ring 13 or the outer ring 15 serving as a raceway ring of the cylindrical roller. When a raceway ring is superfinished, the raceway ring is rotatively driven via a cylindrical backing plate 71 connected to a rotational drive source such as a motor (not shown). Namely, as shown in FIG. 14, one end surface of the raceway ring is caused to abut an annular shaft end portion 71a of the backing plate 71, and the raceway ring is pressed against the backing plate 71. Accordingly, a rotational drive force from the backing plate 71 is transmitted to the raceway ring. For example, regarding pressing of the raceway ring, as shown in FIG. 15, the circumferential surfaces of a plurality of (two as an example in FIG. 15) pressure rolls 73 may be pressed against the other end surface of the raceway ring, and the raceway ring and the backing plate 71 may be pressed against each other. In this case, the pressure rolls 73 are pressed against the other end surface of the raceway ring by a biasing mechanism (not shown) and rotate dependently on rotation of the backing plate 71 and the raceway ring. In this way, the raceway ring is free to rotate integrally with the backing plate 71.

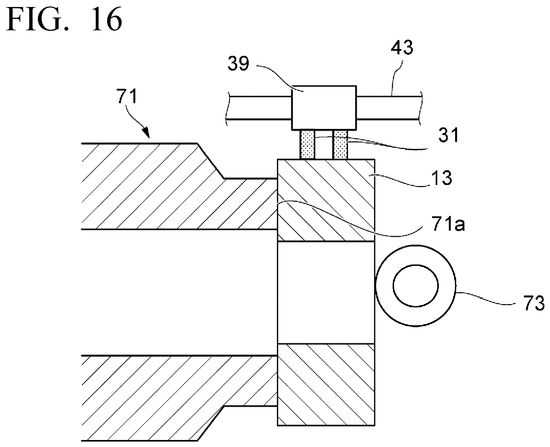

FIG. 16 is a process explanatory diagram schematically showing a situation of superfinishing the inner ring raceway surface 13a of the inner ring 13. While the first grindstones 31 provided in the crowning finishing portion 39 are pressurized onto the outer circumferential surface of the inner ring 13 fixed to the backing plate 71 with a predetermined load from the outward side toward the inward side in the radial direction, the inner ring 13 is rotatively driven. Similarly to the case of the cylindrical roller 17 described above, the first grindstones 31 are caused to micro-vibrate in the inner ring axial direction. In addition, a traverse operation of the first grindstones 31 in the inner ring axial direction is selectively performed in accordance with the sizes of the widths of the crown portions in the inner ring axial direction and the grindstone widths of the first grindstones 31. Accordingly, the crown portions are superfinished. Superfinishing of the middle portion is performed using the second grindstone 33 similar to the case of the cylindrical roller 17 described above from the outward side of the inner ring 13 in the radial direction.

Although illustration is omitted, superfinishing of the outer ring raceway surface 15a of the outer ring 15 can be performed similarly as described above. For example, the first grindstones 31 and the second grindstone 33 are pressed against the inner circumferential surface of the inner ring 13 from the inward side toward the outward side in the radial direction. In addition, while the outer ring 15 is rotatively driven, micro-vibrating of the outer ring axial direction, or micro-vibrating of the outer ring axial direction and a traverse operation are performed.

In superfinishing of the crown portions 25 and the middle portion 27 in each of the examples described above, it is favorable that respective processing ranges thereof overlap each other. That is, the grindstone widths or the traversing ranges are set such that the respective processing ranges of the first grindstones 31 and the second grindstone 33 overlap each other. Accordingly, insufficient processing of a joint between the processing ranges is resolved, and continuous surface roughness can be obtained in the axial direction of the cylindrical roller and the width direction of the raceway ring.

In addition, each of the foregoing superfinishing processes can be particularly favorably applied to processing of surfaces having a significantly curved generatrix shape in the end portions on the rolling surface of the cylindrical roller 17, and on the raceway surface of each of the inner ring 13 and the outer ring 15, for example, a compound crown shape constituted of an arc having a small radius of curvature, and a logarithmic crown shape which is a logarithmic shape. Even when the shape of the machined surface changes significantly depending on the place as described above, the machined surface can be efficiently machined to have favorably continuous surface roughness in a short period of time while decrease in service life of the grindstones due to uneven wear of the grindstones is curbed.

Up until now, it has been common to perform processing by causing one grindstone to perform traversing between the crown portions 25 and the middle portion 27, but the time required for such processing can be shortened or eliminated using two grindstones. Accordingly, it is possible to shorten a processing cycle time, and it is possible to expect significant improvement in productivity.

Moreover, since the middle portion 27 on the rolling surface of the cylindrical roller 17 comes into contact with the raceway surface of the inner ring 13 or the outer ring 15, it is possible to expect that the service life of the bearing will be extended by reducing the surface roughness of the middle portion 27. Further, in the present superfinishing method, since different grindstones can be used for processing the crown portions 25 and the middle portion 27, the kind of grindstone can be selected individually in accordance with the target roughness, thereby making it possible to superfinish each portion under optimal conditions.

In the embodiment, a machine includes the foregoing bearing, which is advantageous for reducing the cost of the bearing.

In the embodiment, a vehicle includes the foregoing bearing, which is advantageous for reducing the cost of the bearing.

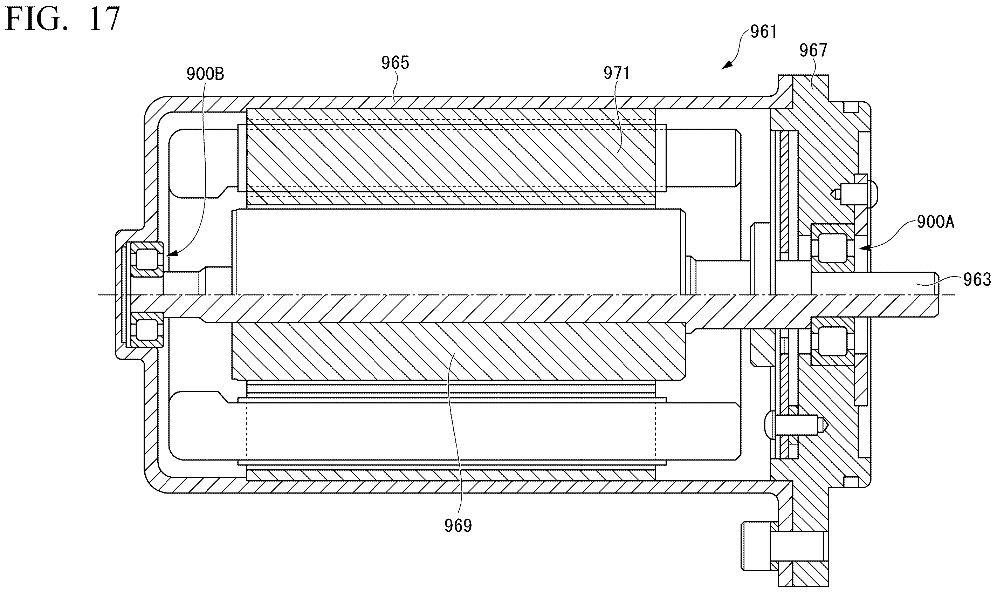

For example, the bearing can be applied as bearings 900A and 900B and the like for supporting a rotation shaft 963 of a motor 961 shown in FIG. 17.

In FIG. 17, the motor 961 is a brushless motor having a cylindrical center housing 965 and a substantially disk-shaped front housing 967 blocking one open end portion of the center housing 965. The freely rotatable rotation shaft 963 is supported on the inward side of the center housing 965 along its shaft center via the bearings 900A and 900B disposed in the front housing 967 and a bottom portion of the center housing 965. A motor drive rotor 969 is provided around the rotation shaft 963, and a stator 971 is fixed to the inner circumferential surface of the center housing 965.

The motor 961 is generally mounted in a machine or a vehicle and rotatively drives the rotation shaft 963 supported by the bearings 900A and 900B.

The bearing can be applied to machines having rotation portions, and various manufacturing apparatuses. The bearing can also be applied to machines including bearings (including manually powered instruments and the like) or vehicles. Regarding machines, for example, it can be applied as bearings used in rotation parts of power generation facilities, such as hydroelectric, thermal, nuclear, and wind (can be applied as bearings for supporting a main shaft, a rotation shaft of a power generator, and the like), as well as ball screw devices, screw devices, devices in which linear guide bearings and ball screws are combined, actuators for XY tables and the like, various industrial machines such as machine tools, home appliances, housing equipment, and the like. In addition, regarding vehicles, it can be applied as bearings used in rotation parts of automobiles, motorcycles, railway vehicles, special vehicles, and the like. In addition, it can be applied as bearings used in rotation parts of steering devices such as steering columns, universal joints, intermediate gears, rack-and-pinions, electric power steering devices, worm speed reducers, and torque sensors, and it can also be applied to vehicles including these. Machines, vehicles, and the like obtained as described above can be constituted at lower cost with higher quality than those in the related art.

The foregoing example is merely an example. Regarding application examples of the bearing, the bearing having this constitution can be favorably applied to any location as long as there is relative rotation, and this can lead to improvement of product quality and reduction of costs.

The technical scope of the present invention is not limited to the range described in the embodiment. Various changes of improvements can be added to the embodiment. Forms to which such changes or improvements are added can also be included in the technical scope of the present invention. In addition, it is not limited to the described embodiment and may be an arbitrary combination of these constituents.

The present disclosure includes the following constitutions and/or combinations.
(A1) A method for superfinishing a component of a roller bearing,
   in which the component has a middle portion having a circumferential surface with a linear profile extending at least in an axial direction, and an end portion having a circumferential surface with a crown profile transitioning from the linear profile, and
   the method includes
      superfinishing the end portion with a first grindstone while rotating the component, and
      superfinishing the middle portion with a second grindstone prepared separately from the first grindstone while rotating the component.
(A2) In the superfinishing method according to (A1), the first grindstone has an axial width larger than an axial width of the end portion, and the superfinishing includes causing the first grindstone to micro-vibrate in the axial direction.
(A3) In the superfinishing method according to (A1), the first grindstone has an axial width smaller than an axial width of the end portion, and the superfinishing includes causing the first grindstone to micro-vibrate in the axial direction, and causing the first grindstone to perform traversing in the axial direction.
(A4) In the superfinishing method according to any one of (A1) to (A3), the superfinishing includes pressing the first grindstone against the end portion in a direction perpendicular to the axial direction of the component.
(A5) In the superfinishing method according to any one of (Al) to (A4), a contact portion of the first grindstone has a concave profile inclined with respect to a pressing direction in which the first grindstone are pressed against the end portion.
(A6) In the superfinishing method according to (A5), at least a part of the concave profile of the first grindstone is formed by abrasion.
(A7) In the superfinishing method according to any one of (A1) to (A6), the end portion includes a first end portion and a second end portion arranged away from each other, and
   the superfinishing includes processing the first end portion and the second end portion substantially at the same time.
(A8) A method for manufacturing a roller bearing including manufacturing a roller bearing using the superfinishing method according to any one of (A1) to (A7).
(A9) A method for manufacturing a vehicle including manufacturing a roller bearing using the manufacturing method according to (A8), and assembling a vehicle using the roller bearing.
(A10) A method for manufacturing a machine including manufacturing a roller bearing using the manufacturing method according to (A8), and assembling a machine using the roller bearing.
(A11) An apparatus for superfinishing a component of a roller bearing,
   in which the component has a middle portion having a circumferential surface with a linear profile extending at least in an axial direction, and an end portion having a circumferential surface with a crown profile transitioning from the linear profile,
   the apparatus includes
      a drive portion rotating the component,
      a first grindstone,
      a second grindstone prepared separately from the first grindstone, and
      a mechanism for pressing the first grindstone and the second grindstone against the component, and
   the mechanism includes
      a first mode for superfinishing the end portion with the first grindstone, and
      a second mode for superfinishing the middle portion with the second grindstone.
(B1) A superfinishing method for superfinishing crown portions with a first grindstone and superfinishing a middle portion with a second grindstone prepared separately from the first grindstone while rotatively driving a surface on either a rolling surface of a roller included in a roller bearing or a raceway surface of a raceway ring included in the roller bearing around an axis of the rolling surface or the raceway surface,
   when superfinishing the crown portions formed at both ends on the surface in a rotation axis direction and the middle portion connected to the crown portions at the center on the surface in the rotation axis direction and having a linear cross-sectional shape in an axial direction on the surface.
(B2) In the superfinishing method according to (B1), the crown portions are superfinished by bringing the first grindstone, each of which has a grindstone width equal to or larger than widths of the crown portions in the axial direction formed on the surface, into contact with the crown portions rotatively driven around the rotation axis and causing the first grindstone to micro-vibrate in the axial direction.
(B3) In the superfinishing method according to (B1), the grindstones are abraded in a manner of following the shape of the surface to superfinish the crown portions by bringing the first grindstone, each of which has a grindstone width narrower than widths of the crown portions in the axial direction formed on the surface, into contact with both ends of the surface in the axial direction rotatively driven around the rotation axis and causing the first grindstone to perform traversing and micro-vibrate in the axial direction.
(B4) In the superfinishing method according to (B1), the middle portion is superfinished by bringing the second grindstone, which has a grindstone width equal to or larger than a width of the middle portion in the axial direction formed on the surface, into contact with the middle portion rotatively driven around the rotation axis and causing the second grindstone to micro-vibrate in the axial direction.
(B5) In the superfinishing method according to (B1), the middle portion is superfinished by bringing the second grindstone, which has a grindstone width narrower than a width of the middle portion in the axial direction formed on the surface, into contact with the middle portion rotatively driven around the rotation axis and causing the second grindstone to perform traversing and micro-vibrate in the axial direction.
(B6) In the superfinishing method according to any one of (B1) to (B5), superfinishing is performed such that regions machined by the first grindstone overlap a region machined by the second grindstone.
(B7) In the superfinishing method according to any one of (B1) to (B6), the crown portions has a logarithmic crown shape or a compound crown shape.
(B8) In the superfinishing method according to any one of (B1) to (B7), the roller bearing is a tapered roller bearing or a cylindrical roller bearing.
(B9) A method for manufacturing a roller bearing using the superfinishing method according to any one of (B1) to (B8).
(B10) A method for manufacturing a vehicle including a roller bearing manufactured using the superfinishing method according to any one of (B1) to (B8).
(B11) A method for manufacturing a machine including a roller bearing manufactured using the superfinishing method according to any one of (B1) to (B8).
(B12) A superfinishing apparatus including
   a first grindstone for superfinishing a surface, that is, either a rolling surface of a roller included in a roller bearing or a raceway surface of a raceway ring included in the roller bearing, and a second grindstone separate from the first grindstone,
   crowning finishing portions for superfinishing crown portions formed at both ends on the surface in a rotation axis direction with the first grindstone while rotatively driving the surface around an axis of the rolling surface or the raceway surface, and
   a middle portion finishing portion for superfinishing a middle portion, which is formed at the center of the rotation axis on the surface, is connected to the crown portions, and has a linear cross-sectional shape in an axial direction, with the second grindstone while rotatively driving the surface around the axis of the rolling surface or the raceway surface.
(B13) In the superfinishing apparatus according to (B12), the first grindstone has a grindstone width equal to or larger than widths of the crown portions in the axial direction formed on the surface, and
   the crowning finishing portions each include
   a rotational drive portion rotating the surface around the axis of the roller when the surface is the rolling surface and around the axis of the raceway ring when the surface is the raceway surface,
   a first pressurization mechanism for pressurizing the first grindstone against both ends on the surface in the axial direction, and
   a first grindstone micro-vibration mechanism for causing the first grindstone to micro-vibrate in the axial direction.
(B14) In the superfinishing apparatus according to (B12), the first grindstone has a grindstone width narrower than widths of the crown portions in the axial direction formed on the surface, and
   the crowning finishing portions each include
   a rotational drive portion rotating the surface around the axis of the roller when the surface is the rolling surface and around the axis of the raceway ring when the surface is the raceway surface,
   a first pressurization mechanism for pressurizing the first grindstone against both ends on the surface in the axial direction,
   a first grindstone movement mechanism for causing the first grindstone to perform traversing in the axial direction, and
   a first grindstone micro-vibration mechanism for causing the first grindstone to micro-vibrate in the axial direction.
(B15) In the superfinishing apparatus according to (B12), the second grindstone has a grindstone width equal to or larger than a width of the middle portion in the axial direction formed on the surface, and
   the middle portion finishing portion includes
   a rotational drive portion rotating the surface around the axis of the roller when the surface is the rolling surface and around the axis of the raceway ring when the surface is the raceway surface,
   a second pressurization mechanism for pressurizing the second grindstone against the center on the surface in the axial direction, and
   a second grindstone micro-vibration mechanism for causing the second grindstone to micro-vibrate in the axial direction.
(B16) In the superfinishing apparatus according to (B12), the second grindstone has a grindstone width narrower than a width of the middle portion in the axial direction formed on the surface, and
   the middle portion finishing portion includes
   a rotational drive portion rotating the surface around the axis of the roller when the surface is the rolling surface and around the axis of the raceway ring when the surface is the raceway surface,
   a second pressurization mechanism for pressurizing the second grindstone against the center on the surface in the axial direction,
   a second grindstone movement mechanism for causing the second grindstone to perform traversing in the axial direction, and
   a second grindstone micro-vibration mechanism for causing the second grindstone to micro-vibrate in the axial direction.
(B17) The superfinishing apparatus according to (B13) or (B14) including an oscillation mechanism for oscillating a pressurization direction of the first grindstone against the surface in the axial direction.
(B18) The superfinishing apparatus according to (B15) or (B16) including an oscillation mechanism for oscillating a pressurization direction of the second grindstone against the surface in the axial direction.
(B19) In the superfinishing apparatus according to any one of (B12) to (B16), the crown portions has a logarithmic crown shape or a compound crown shape.

### REFERENCE SIGNS LIST

11 Cylindrical roller bearing
13 Inner ring
13a Inner ring raceway surface
13b Clearance groove
15 Outer ring
15a Outer ring raceway surface
15b Clearance groove
17 Cylindrical roller (rolling body)
17a Circumferential surface
17b First crowning surface
17c Second crowning surface
17d Chamfered portion
19 Holder
21 Inner ring flange portion
23a, 23b Outer ring flange portion
25 End portion (crown portion)
27 Middle portion
31 First grindstone
33 Second grindstone
35 Roller
37 Rotational drive portion
39 Crowning finishing portion
41 Middle portion finishing portion
43 Rail
45 Grindstone holder
47 Slide block
49 Feeding drive portion
51 Vibration applying portion
53 Base
55 Grindstone holder
57 Slide block
59 Feeding drive portion
61 Vibration applying portion
63 Base
65 Grindstone holding portion
67 Support portion
69 Compression spring
71 Backing plate
100 Superfinishing apparatus

## Claims

1. A method for superfinishing a component of a roller bearing,
wherein the component has a middle portion having a circumferential surface with a linear profile extending at least in an axial direction, and an end portion having a circumferential surface with a crown profile transitioning from the linear profile, and
the method comprises:
superfinishing the end portion with a first grindstone while rotating the component; and
superfinishing the middle portion with a second grindstone prepared separately from the first grindstone while rotating the component.

2. The superfinishing method according to claim 1,
wherein the first grindstone has an axial width larger than an axial width of the end portion, and
the superfinishing includes causing the first grindstone to micro-vibrate in the axial direction.

3. The superfinishing method according to claim 1,
wherein the first grindstone has an axial width smaller than an axial width of the end portion, and
the superfinishing includes causing the first grindstone to micro-vibrate in the axial direction, and causing the first grindstone to perform traversing in the axial direction.

4. The superfinishing method according to any one of claims 1 to 3,
wherein the superfinishing includes pressing the first grindstone against the end portion in a direction perpendicular to the axial direction of the component.

5. The superfinishing method according to any one of claims 1 to 4,
wherein a contact portion of the first grindstone has a concave profile inclined with respect to a pressing direction in which the first grindstone is pressed against the end portion.

6. The superfinishing method according to claim 5,
wherein at least a part of the concave profile of the first grindstone is formed by abrasion.

7. The superfinishing method according to any one of claims 1 to 6,
wherein the end portion includes a first end portion and a second end portion arranged away from each other, and
the superfinishing includes processing the first end portion and the second end portion substantially at the same time.

8. A method for manufacturing a roller bearing comprising:
manufacturing a roller bearing using the superfinishing method according to any one of claims 1 to 7.

9. A method for manufacturing a vehicle comprising:
manufacturing a roller bearing using the manufacturing method according to claim 8; and
assembling a vehicle using the roller bearing.

10. A method for manufacturing a machine comprising:
manufacturing a roller bearing using the manufacturing method according to claim 8; and
assembling a machine using the roller bearing.

11. An apparatus for superfinishing a component of a roller bearing,
wherein the component has a middle portion having a circumferential surface with a linear profile extending at least in an axial direction, and an end portion having a circumferential surface with a crown profile transitioning from the linear profile,
the apparatus comprises:
a drive portion rotating the component;
a first grindstone;
a second grindstone prepared separately from the first grindstone; and
a mechanism for pressing the first grindstone and the second grindstone against the component, and
the mechanism includes
a first mode for superfinishing the end portion with the first grindstone, and
a second mode for superfinishing the middle portion with the second grindstone.
